# FASCICULE DE BREVET EUROPEEN

(11) **EP 3 496 997 B1**
(45) Date de publication et mention de la délivrance du brevet: **02.09.2020**
(21) Numéro de dépôt: 17745818.9
(22) Date de dépôt: 03.07.2017
(51) Int. Cl.: B62D 25/20

(54) **PLANCHER RENFORCE DE VEHICULE AUTOMOBILE UTILITAIRE**
VERSTÄRKTER FUSSBODEN EINES NUTZKRAFTFAHRZEUGS
REINFORCED FLOOR OF A UTILITY MOTOR VEHICLE

(30) Priorité: 12.08.2016 FR 1657755
(43) Date de publication de la demande: 19.06.2019
(73) Titulaire: PSA Automobiles S.A., 78300 Poissy (FR)
(72) Inventeur: BENANE, Said, 94550 CHEVILLY LARUE (FR)
(86) Numéro de dépôt international: PCT/FR2017/051800
(87) Numéro de publication internationale: WO 2018/029403

(56) Documents cités:
- DE-A1-102004 049 833
- FR-A1- 2 987 021
- US-A1- 2003 205 917
- US-A1- 2011 298 245

## Description

L'invention a trait au domaine des véhicules automobiles. L'invention se rapporte particulièrement au renforcement de la structure d'un véhicule automobile. Plus précisément, l'invention concerne une partie arrière de structure d'un véhicule automobile avec des moyens de renfort. L'invention a plus particulièrement trait au domaine des véhicules automobiles de type utilitaire.

Le plancher arrière d'un véhicule automobile est généralement amené à supporter un volume de charge important, de manière à garantir le transport d'objets divers et/ou de passagers.

Le document FR 2 987 021 A1 divulgue un plancher arrière d'un véhicule automobile. Les parties avant et arrière du plancher arrière comprennent des moyens de renfort qui s'étendent transversalement par rapport à l'axe longitudinal du véhicule et des moyens de rigidification situés entre les moyens de renfort et au niveau de la liaison entre les parties avant et arrière du plancher. Les moyens de renfort sont, par exemple, des traverses et permettent d'augmenter la résistance aux efforts de flexion et de torsion de chacune des parties du plancher arrière. Les moyens de rigidification sont, par exemple, des nervures longitudinales et permettent notamment d'accroître la résistance aux efforts de flexion et de torsion de chacune des parties du plancher arrière au niveau de la jonction entre ces deux parties. Des nervures longitudinales situées dans les parties avant et arrière du plancher arrière permettent également de rigidifier davantage le plancher arrière. Dans le cas d'un effort important sur le plancher, il y a cependant un risque de déformation du plancher, notamment à distance des traverses.

Pour un volume de charge important, allant par exemple jusqu'à 1400 kg, les moyens de rigidification du plancher de l'enseignement ci-avant peuvent s'avérer insuffisants, en particulier sur les zones à distance des traverses.

L'invention a pour objectif de pallier au moins un des inconvénients de l'art antérieur susmentionné. Plus précisément, l'invention a pour objectif de proposer une partie arrière de véhicule apte à supporter un volume de charge important.

L'invention a pour objet une partie arrière de structure d'un véhicule, comprenant une traverse, un plancher arrière disposé sur ladite traverse, et des moyens de renfort dudit plancher. Ladite partie arrière de structure est remarquable en ce que les moyens de renfort forment au moins un bras s'étendant longitudinalement sous la traverse et le plancher, ledit ou lesdits bras étant fixés à la traverse et au plancher.

Selon des modes particuliers de réalisation, la partie arrière de structure d'un véhicule peut comprendre une ou plusieurs des caractéristiques suivantes, prises isolément ou selon toutes les combinaisons techniquement possibles :
- Le ou chacun des bras comprend un profilé s'étendant sous le plancher et au moins une pièce de liaison à la traverse.
- Le profilé comprend une section transversale formant une cavité, ladite cavité étant notamment apte à recevoir des éléments, tels que des câbles et des tuyaux, s'étendant sous le plancher du véhicule.
- La ou chacune des pièces de liaison forme une nervure s'étendant essentiellement perpendiculairement à une face inférieure de la traverse et à une face avant et/ou arrière de ladite traverse, ladite face étant située du côté du profilé correspondant.
- La ou chacune des pièces de liaison forme une nervure s'étendant le long du plancher.
- Les moyens de renfort forment deux desdits bras et comprennent une première nervure transversale fixée aux pièces de liaison desdits bras ladite première nervure transversale s'étendant sous le plancher.
- Les moyens de renfort comprennent au moins une pièce de liaison additionnelle fixée à la traverse et disposée entre les pièces de liaison des deux bras, ladite ou lesdites pièces de liaison additionnelles étant fixées à la première nervure transversale.
- La ou chacune des pièces de liaison et la ou les pièces de liaison additionnelles sont fixées, en outre et à l'opposé de la première nervure transversale, à une seconde nervure transversale, ladite seconde nervure transversale s'étendant sous la traverse.
- La ou les pièces de liaison et la ou les pièces de liaison additionnelles sont orientées selon une direction sensiblement longitudinale et comprennent des portions inclinées par rapport à l'axe longitudinal du véhicule selon un angle compris entre 5° et 30°.

L'invention a également pour objet un véhicule automobile comprenant une partie arrière de structure, remarquable en ce que ladite partie arrière de structure est conforme à l'invention.

Selon un mode particulier de réalisation de l'invention, le véhicule automobile est un véhicule automobile de type utilitaire.

De manière générale, les modes particuliers de chaque objet de l'invention sont également applicables aux autres objets de l'invention. Dans la mesure du possible, chaque objet de l'invention est combinable aux autres objets.

L'invention a donc pour objet une solution simple, économique et robuste. En effet, grâce à la présence de moyens de renfort à proximité d'une traverse, le plancher arrière peut supporter un volume de charge important, jusqu'à 1400 kg. Les moyens de renfort permettent aux efforts subis par le plancher de se répartir sur l'ensemble de la traverse et également de se disperser sur le plancher arrière, notamment grâce aux bras allongés qui s'étendent longitudinalement sous le plancher. La combinaison de différents moyens de renfort les uns à côtés des autres permet également d'accentuer le renforcement dudit plancher arrière. L'orientation des pièces de liaison permet de répartir les efforts sur la traverse, non seulement dans une direction longitudinale, mais aussi selon la direction transversale. Le placement des moyens de renfort sous le plancher arrière et sous la traverse permet également d'améliorer la rigidité structurelle du plancher sans entraver son espace de chargement.

D'autres caractéristiques et avantages de la présente invention seront mieux compris à l'aide de la description donnée à titre d'exemple et en référence aux dessins parmi lesquels :
La figure 1 montre un véhicule automobile de type utilitaire conforme à l'invention.
La figure 2 présente une vue de dessous d'une partie arrière de structure d'un véhicule automobile selon l'invention.
La figure 3 présente la partie arrière de structure d'un véhicule automobile selon une vue d'ensemble par rapport à la figure 2.
La figure 4 montre un agrandissement des moyens de renfort de la partie arrière de structure d'un véhicule automobile selon l'invention.

Dans la description qui va suivre, la direction longitudinale correspond à la direction principale de déplacement du véhicule, et le sens avant à son sens principal de déplacement. La direction transversale est perpendiculaire à la direction longitudinale.

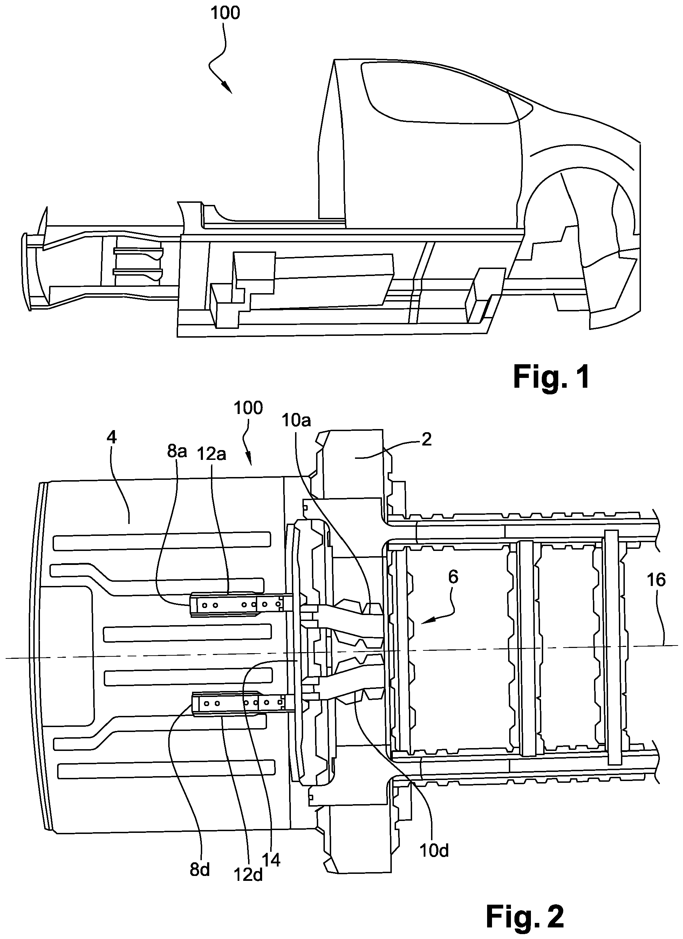

La figure 1 illustre un véhicule automobile, de type véhicule utilitaire, dont on comprend qu'il est important que le plancher arrière soit capable de supporter une forte charge, sans subir de déformation quelconque. Cette forte charge peut monter par exemple jusqu'à 1400 kg. Ce véhicule peut être une camionnette.

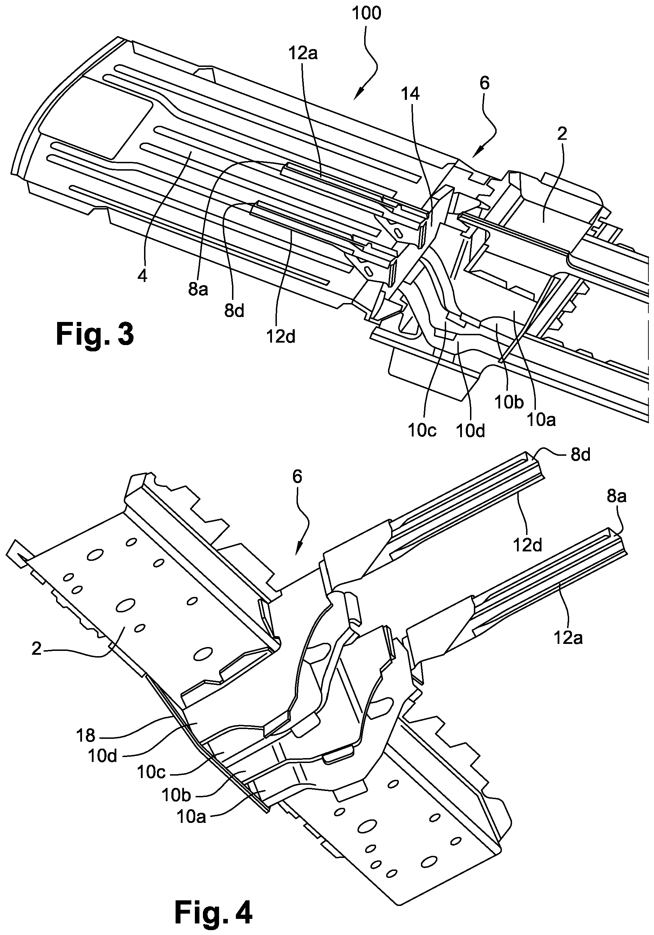

Les figures 2 et 3 illustrent une partie arrière 100 de structure d'un véhicule automobile, notamment d'un véhicule automobile du type illustré à la figure 1. La partie arrière 100 de structure du véhicule comporte au moins une traverse 2 qui est transversale à la direction longitudinale du véhicule. La partie arrière 100 comporte aussi un plancher arrière 4 qui repose sur la traverse 2 afin de supporter un volume de charge important.

De manière générale, le plancher arrière 4 peut comporter plusieurs tôles mises bout à bout l'une à côté des autres. Le plancher arrière 4 peut aussi être fait d'une seule tôle.

La traverse 2 est généralement située au niveau, ou du moins à proximité, de l'essieu arrière (non représenté) du véhicule automobile. D'autres traverses peuvent également être présentes afin de soutenir le plancher arrière du véhicule. Ces autres traverses peuvent se situer alors entre l'essieu arrière et l'essieu avant (non représenté) du véhicule.

La partie arrière 100 de structure du véhicule automobile est renforcée par des moyens de renforts 6 formant au moins un bras (8a, 8d). Les moyens de renforts avec la traverse 2 sont également représentés à la figure 4. De manière préférentielle, les moyens de renforts forment deux bras (8a, 8d) comme représenté sur les figures 2, 3 et 4.

Les bras (8a, 8d) s'étendent de façon longitudinale sous la traverse 2 et le plancher 4 de manière à ne pas entraver l'espace de chargement du plancher 4. Les bras (8a, 8d) sont attachés par des moyens de fixation, notamment par des moyens de soudure.

Chacun des bras (8a, 8d) comprend un profilé (12a, 12d) qui s'étend longitudinalement sous le plancher arrière 4 et au moins une pièce de liaison (10a, 10d) fixée à la traverse 2. Chaque profilé (12a, 12d) est rigidement fixé à la pièce de liaison correspondante (10a, 10d), par exemple par soudure.

De manière avantageuse, le profilé (12a, 12d) peut comprendre une section transversale formant une cavité apte à recevoir des éléments, tels que des câbles et des tuyaux, s'étendant sous le plancher du véhicule.

La ou chacune des pièces de liaison (10a, 10d) forme une nervure ou une partie saillante capable de reprendre des efforts générés par des charges sur le plancher 4. Cette partie saillante s'étend essentiellement de manière perpendiculaire à une face inférieure de la traverse 2 et à une face avant et/ou arrière de ladite traverse 2, ladite face avant et/ou arrière étant située du côté du profilé (12a, 12d) correspondant. Lorsque la traverse 2 est située au niveau de l'essieu arrière du véhicule automobile, il est préférable que les deux bras (8a, 8d) s'étendent vers l'arrière du plancher arrière 4 (comme dans la configuration représentée aux figures 2 et 3). Dès lors, dans ce cas, les deux nervures formées par les pièces de liaison (10a, 10d) s'étendent perpendiculairement à la face arrière de la traverse 2. Cependant, il est possible que les deux bras soient positionnés pour s'étendre vers l'avant du plancher arrière 4, ou qu'un bras soit positionné pour s'étendre vers l'avant du plancher 4 et que le second bras soit positionné pour s'étendre vers l'arrière. Au moins un bras, similaire au bras (8a, 8d), peut être également présent afin d'accentuer encore plus le renfort structurel apporté au plancher 4.

La ou les nervures formées par la ou les pièces de liaison peut s'étendre également le long du plancher 4, notamment sous la partie du plancher 4 au voisinage de la traverse 2.

Il est à noter que la présence de pièces de liaison additionnelles (10b, 10c) sous la traverse 2, préférentiellement disposées entre les pièces de liaison (10a, 10d) des bras (8a, 8d) permet d'accentuer le renforcement de la partie arrière 100 de structure, et notamment le renforcement de la traverse 2. Ces pièces de liaison additionnelles peuvent optionnellement être reliées à un bras similaire à un des bras (8a, 8d), de façon à accentuer le renforcement du plancher arrière 4.

De manière similaire aux pièces de liaison (10a, 10d), chacune des pièces de liaison additionnelles (10b, 10c) forme une nervure s'étendant essentiellement de manière perpendiculaire à une face inférieure de la traverse 2.

Les pièces de liaison (10a, 10d) et les pièces de liaison additionnelles (10b, 10c) peuvent comprendre des portions, préférentiellement centrales, inclinées par rapport à l'axe longitudinal 16 du véhicule, selon un angle compris entre 5° et 30°. La direction générale de ces pièces de liaison (10a, 10b, 10c, 10d) est sensiblement longitudinale malgré l'inclinaison des portions centrales par rapport à l'axe 16. Cette inclinaison dans le sens transversal permet de renforcer la rigidité de la traverse 2 transversalement.

Les moyens de renfort (6) peuvent aussi comprendre une première nervure transversale 14 qui est formée sous le plancher arrière 4. Plus particulièrement, cette première nervure transversale 14 est fixée aux pièces de liaison (10a, 10d) et aux les pièces de liaison additionnelles (10b, 10c) présentes sur la traverse 2, comme représenté aux figures 2 et 3.

Les moyens de renfort (6) peuvent enfin comprendre une seconde nervure transversale 18 qui est formée sous la traverse 2. Plus particulièrement, cette seconde nervure transversale 18 est fixée aux pièces de liaison (10a, 10d) et aux pièces de liaison additionnelles (10b, 10c) présentes sur la traverse 2, comme représenté à la figure 4.

Les moyens de renfort sont avantageusement réalisé en tôle métallique, par emboutissage et soudage desdites tôles.

## Revendications

1. Partie arrière (100) de structure d'un véhicule, comprenant une traverse (2), un plancher arrière (4) disposé sur ladite traverse (2), et des moyens de renfort (6) dudit plancher, **caractérisée en ce que** les moyens de renfort (6) forment au moins un bras (8a, 8d) s'étendant longitudinalement sous la traverse (2) et le plancher (4), ledit ou lesdits bras étant fixés à la traverse (2) et au plancher (4).

2. Partie arrière (100) de structure d'un véhicule selon la revendication 1, **caractérisée en ce que** le ou chacun des bras (8a, 8d) comprend un profilé (12a, 12d) s'étendant sous le plancher (4) et au moins une pièce de liaison (10a, 10d) à la traverse (2).

3. Partie arrière (100) de structure d'un véhicule selon l'une des revendications 1 et 2, **caractérisée en ce que** le profilé (12a, 12d) comprend une section transversale formant une cavité apte à recevoir des éléments s'étendant sous le plancher du véhicule.

4. Partie arrière (100) de structure d'un véhicule selon l'une des revendications 2 et 3, **caractérisée en ce que** la ou chacune des pièces de liaison (10a, 10d) forme une nervure s'étendant essentiellement perpendiculairement à une face inférieure de la traverse (2) et à une face avant et/ou arrière de ladite traverse (2), ladite face étant située du côté du profilé (12a, 12d) correspondant.

5. Partie arrière (100) de structure d'un véhicule selon l'une des revendications 2 à 4, **caractérisée en ce que** la ou chacune des pièces de liaison (10a, 10d) forme une nervure s'étendant le long d'une portion du plancher (4).

6. Partie arrière (100) de structure d'un véhicule selon l'une des revendications 2 à 5, **caractérisée en ce que** les moyens de renfort (6) forment deux desdits bras et comprennent une première nervure transversale (14) fixée aux pièces de liaison (10a, 10d) desdits bras (8a, 8d), ladite première nervure transversale (14) s'étendant sous le plancher (4).

7. Partie arrière (100) de structure d'un véhicule selon la revendication 6, **caractérisé en ce que** les moyens de renfort (6) comprennent au moins une pièce de liaison additionnelle (10b, 10c) fixée à la traverse (2) et disposée entre les pièces de liaison (10a, 10d) des deux bras (8a, 8d), ladite ou lesdites pièces de liaison additionnelles (10b, 10c) étant fixée à la première nervure transversale (14).

8. Partie arrière (100) de structure d'un véhicule selon la revendication 7, **caractérisée en ce que** la ou chacune des pièces de liaison (10a, 10d) et la ou les pièces de liaison additionnelles (10b, 10c) sont fixées, en outre et à l'opposé de la première nervure transversale, à une seconde nervure transversale (18), ladite seconde nervure transversale (18) s'étendant sous la traverse (2).

9. Partie arrière (100) de structure d'un véhicule selon l'une des revendications 2 à 8, **caractérisée en ce que** la ou les pièces de liaison (10a, 10d) et/ou la ou les pièces de liaison additionnelles (10b, 10c) sont orientées selon une direction sensiblement longitudinale et comprennent des portions inclinées par rapport à l'axe longitudinal (16) du véhicule selon un angle compris entre 5° et 30°.

10. Véhicule automobile, notamment un véhicule automobile de type utilitaire, comportant une partie arrière (100) de structure, **caractérisé en ce que** ladite partie arrière (100) de structure est conforme à l'une des revendications 1 à 9.

## Patentansprüche

1. Hinteres Strukturteil (100) eines Fahrzeugs, mit einem Querträger (2), einem auf dem Querträger (2) angeordneten hinteren Boden (4) und Mitteln (6) zur Verstärkung des Bodens, **dadurch gekennzeichnet, dass** die Verstärkungsmittel (6) mindestens einen Arm (8a, 8d) bilden, der sich in Längsrichtung unter dem Querträger (2) und dem Boden (4) erstreckt, wobei der oder die Arme am Querträger (2) und am Boden (4) befestigt sind.

2. Hinteres Strukturteil (100) eines Fahrzeugs nach Anspruch 1, **dadurch gekennzeichnet, dass** der oder jeder der Arme (8a, 8d) ein sich unter dem Boden (4) erstreckendes Profil (12a, 12d) und mindestens ein Verbindungsteil (10a, 10d) zum Querträger (2) aufweist.

3. Hinteres Strukturteil (100) eines Fahrzeugs nach einem der Ansprüche 1 oder 2, **dadurch gekennzeichnet, dass** das Profil (12a, 12d) einen Querschnitt aufweist, der einen Hohlraum bildet, der geeignet ist, Elemente aufzunehmen, die sich unter dem Boden des Fahrzeugs erstrecken.

4. Hinteres Strukturteil (100) eines Fahrzeugs nach einem der Ansprüche 2 oder 3, **dadurch gekennzeichnet, dass** das oder jedes der Verbindungsteile (10a, 10d) eine Rippe bildet, die sich im Wesentlichen senkrecht zu einer unteren Fläche des Querträgers (2) und zu einer vorderen und/oder hinteren Fläche des Querträgers (2) erstreckt, wobei diese Fläche auf der gleichen Seite wie das entsprechende Profil (12a, 12d) angeordnet ist.

5. Hinteres Strukturteil (100) eines Fahrzeugs nach einem der Ansprüche 2 bis 4, **dadurch gekennzeichnet, dass** das oder jedes Verbindungsteil (10a, 10d) eine Rippe bildet, die sich entlang eines Abschnitts des Bodens (4) erstreckt.

6. Hinteres Strukturteil (100) eines Fahrzeugs nach einem der Ansprüche 2 bis 5, **dadurch gekennzeichnet, dass** die Verstärkungsmittel (6) zwei der genannten Arme bilden und eine erste Querrippe (14) umfassen, die an den Verbindungsteilen (10a, 10d) der genannten Arme (8a, 8d) befestigt ist, wobei sich die genannte erste Querrippe (14) unter dem Boden (4) erstreckt.

7. Hinteres Strukturteil (100) eines Fahrzeugs nach Anspruch 6, **dadurch gekennzeichnet, dass** die Verstärkungsmittel (6) mindestens ein zusätzliches Verbindungsteil (10b, 10c) umfassen, das an dem Querträger (2) befestigt und zwischen den Verbindungsteilen (10a, 10d) der beiden Arme (8a, 8d) angeordnet ist, wobei das oder die zusätzlichen Verbindungsteile (10b, 10c) an der ersten Querrippe (14) befestigt sind.

8. Hinteres Strukturteil (100) eines Fahrzeugs nach Anspruch 7, **dadurch gekennzeichnet, dass** das oder jedes der Verbindungsteile (10a, 10d) und das oder jedes zusätzliche Verbindungsteil (10b, 10c) zusätzlich und gegenüber der ersten Querrippe an einer zweiten Querrippe (18) befestigt ist, wobei sich die zweite Querrippe (18) unter dem Querträger (2) erstreckt.

9. Hinteres Strukturteil (100) eines Fahrzeugs nach einem der Ansprüche 2 bis 8, **dadurch gekennzeichnet, daß** das oder die Verbindungsteile (10a, 10d) und/oder das oder die zusätzlichen Verbindungsteile (10b, 10c) im wesentlichen in Längsrichtung ausgerichtet sind und Abschnitte aufweisen, die in bezug auf die Längsachse (16) des Fahrzeugs unter einem Winkel zwischen 5° und 30° geneigt sind.

10. Kraftfahrzeug, insbesondere Nutzfahrzeug, mit einem hinteren Strukturteil (100), **dadurch gekennzeichnet, dass** das hintere Strukturteil (100) einen der Ansprüche 1 bis 9 erfüllt.

## Claims

1. Rear structural part (100) of a vehicle, comprising a cross member (2), a rear floor (4) disposed on said cross member (2), and means (6) for reinforcing said floor, **characterised in that** the reinforcing means (6) form at least one arm (8a, 8d) extending longitudinally under the cross member (2) and the floor (4), said arm or arms being fixed to the cross member (2) and to the floor (4).

2. Rear structural part (100) of a vehicle according to claim 1, **characterised in that** the or each of the arms (8a, 8d) comprises a profile (12a, 12d) extending under the floor (4) and at least one connecting part (10a, 10d) to the cross member (2).

3. Rear structural part (100) of a vehicle according to one of claims 1 and 2, **characterised in that** the profile (12a, 12d) comprises a cross-section forming a cavity capable of receiving elements extending under the floor of the vehicle.

4. Rear structural part (100) of a vehicle according to one of claims 2 and 3, **characterised in that** the or each of the connecting parts (10a, 10d) forms a rib extending essentially perpendicularly to a lower face of the cross-member (2) and to a front and/or rear face of said cross-member (2), said face being located on the same side as the corresponding profile (12a, 12d).

5. Rear structural part (100) of a vehicle according to one of claims 2 to 4, **characterised in that** the or each connecting part (10a, 10d) forms a rib extending along a portion of the floor (4).

6. Rear structural part (100) of a vehicle according to one of claims 2 to 5, **characterised in that** the reinforcement means (6) form two of said arms and comprise a first transverse rib (14) fixed to the connecting parts (10a, 10d) of said arms (8a, 8d), said first transverse rib (14) extending under the floor (4).

7. Rear structural part (100) of a vehicle according to claim 6, **characterised in that** the reinforcement means (6) comprise at least one additional connecting part (10b, 10c) fixed to the cross member (2) and disposed between the connecting parts (10a, 10d) of the two arms (8a, 8d), said additional connecting part or parts (10b, 10c) being fixed to the first transverse rib (14).

8. Rear structural part (100) of a vehicle according to claim 7, **characterised in that** the or each of the connecting parts (10a, 10d) and the or each additional connecting part (10b, 10c) are fixed, in addition and opposite to the first transverse rib, to a second transverse rib (18), said second transverse rib (18) extending under the cross member (2).

9. Rear structural part (100) of a vehicle according to one of claims 2 to 8, **characterised in that** the connecting part or parts (10a, 10d) and/or the additional connecting part or parts (10b, 10c) are oriented in a substantially longitudinal direction and comprise portions inclined with respect to the longitudinal axis (16) of the vehicle at an angle of between 5° and 30°.

10. A motor vehicle, in particular a utility type motor vehicle, comprising a rear structural part (100), **characterised in that** said rear structural part (100) complies with one of claims 1 to 9.
